# EUROPEAN PATENT APPLICATION

(11) **EP 1 833 027 A1**
(43) Date of publication of application: **12.09.2007**
(21) Application number: 04805135.3
(22) Date of filing: 17.11.2004
(51) Int. Cl.: G07D 7/00

(54) **PORTABLE DOCUMENT-VERIFICATION DEVICE AND VERIFICATION METHOD USING SAID DEVICE**

(71) Applicant: Indra Sistemas, S.A., E-28018 Alcobendas (ES)
(72) Inventor: LUCAS GÓMEZ, Ángel, E-28108 Alcobendas (ES); VÁZQUEZ IGUAL, Santiago, E-28108 Alcobendas (ES)
(74) Representative: Elzaburu Marquez, Alberto
(86) International application number: PCT/ES2004/070098
(87) International publication number: WO 2006/056625

(57) **Abstract**

The invention relates to a device which can be used to verify documents quickly and effectively, in which all of the components are integrated in a stand-alone portable assembly. For said purpose, the device comprises: a full-page document reader which is equipped with three types of light, namely normal, ultraviolet and infrared light; and a PC tablet or portable computer which is interconnected with the latter and which is equipped with power supply means that are powered by an integrated battery, an external battery or the mains. The device can be used to: identify the type of document, the country and any possible variations in relation to the document in force; capture data and store same; locate valid documents that exist world-wide in its own database; and verify if the document has been manipulated. In addition, the device can also comprise a document chip reader, a fingerprint reader, a photographic camera and an iris camera, or a GPRS or UMTS transmitter for transmitting and receiving information with a central database.

## Description

### OBJECT OF THE INVENTION

The object of this invention is a portable device for verification of citizen ID and travel documents, as well as the document verification procedure using the invention device. This invention is characterised by the portability and integration into a single piece of equipment of the means required to correctly verify the ID documents used by people.

This invention is characterised by the fact that it succeeds in integrating into a single device the necessary identification means, thereby making it a stand-alone portable assembly which facilitates the job of complete, integrated identification in any place and situation.

Therefore, this invention is included in the range of equipments used in the identification of individuals and authentication of travel documents.

### BACKGROUND OF THE INVENTION

The identification of travel documents to date has generally been done at border posts or in stationary sites where control and identification of people and verification of travel and/or identity documents are required. These checks are done on the basis of first an identification and then a visual match between the document photograph and the person carrying the travel document. In the event of doubt, the data are input into a computer where subsequent checks are made. Additionally, in some cases, travel and/or ID document readers are used to verify if the document has been manipulated.

These verification and identification tasks, because of the way in which they are carried out, the equipment used, their interaction and their interconnection, require that they be done in a stationary manner in a control post, i.e. it is not possible to effectively, securely make the identification in places other than those already established, except for purely visual identifications without guarantees on the part of the functionary since in this type of identification any decision regarding the authenticity of the identification is left to the mere intuition of the functionary.

Another drawback of current identification systems is that making a complete identification is slow because the equipments are not connected to each other, and a first decision on whether or not a subsequent identification is advisable is made by the functionary according to the identification criteria.

Therefore, the purpose of the invention is to achieve an efficient system to quickly and effectively identify and verify travel and/or ID documents, in which the functionary or security personnel is supported by the existing technical means which will be interconnected to each other, in which the responsibility for suspicion concerning the identification does not have to be left to the functionary's intuition, and in which such identification means are portable and stand-alone in their operation.

### DESCRIPTION OF THE INVENTION

The invention of the portable device for document verification basically consists of the development of an equipment that incorporates known means of identification into a transportable medium, e.g. a case, where such means are also interconnected to each other and where the assembly is stand-alone in its operation, i.e. it can be used anywhere.

The means of identification and verification used are, on one hand, a travel document reader which is equipped with three types of reading lights, namely normal, ultraviolet and infrared, and which reads all information or security markings incorporated into the document.

The document reader is capable of identifying the type of document in question, the country of origin and if it matches any of the different types of that sort of document that may legally exist in that country. In other words, it would be capable of identifying if the document is an ID document or a passport, the country it is from, and to which of the possible variations of passport that may effectively and legally exist in that country it corresponds.

Thanks to the different types of light, the document reader captures all the document information, all the information is recorded in a local and/or central database, and a search is made for the corresponding document stored on the hard disk of a PC computer where all the valid documents in circulation around the world have been stored. When that document has been found, the equipment proceeds to verify if it has been manipulated and matches the stored original.

Then a comparison of security standards is carried out. There are various control points to be verified which can be parameterised by the user. For example, some control points are the holograms, phantom images, ID data, size and dimensions of the infrared images, etc., as well as any security systems that may be included on the document such as micro-text, colours, chips, etc.

If the functionary does not think that there are sufficient guarantees regarding the authenticity of an individual's identification, he may, at his own initiative, send the person's data to a central database via UMTS, GPRS, or another technologically available means of communication, for which purpose the country data, type of document of that country and the document number are sent, as well as the individual's details, e.g. ID number, first name, surnames and birth date. The central database analyses the data and sends an acknowledgement of agreement, and could even return the photo information and/or other identifying data.

In addition, the device that is the object of the invention can be equipped with a fingerprint reader, to compare the fingerprint to the one on the travel document, and also, for purposes of a better, more comprehensive identification, it could be equipped with a camera to take the person's photograph. Therefore, it is possible to send and validate in the central database the biometric data collected via devices that may be included in the case.

### DESCRIPTION OF THE DRAWINGS

To complement the following description and in order to better understand its characteristics, this descriptive report is accompanied by a set of drawings whose figures show, on an illustrative but not limitative basis, the most significant details of the invention.

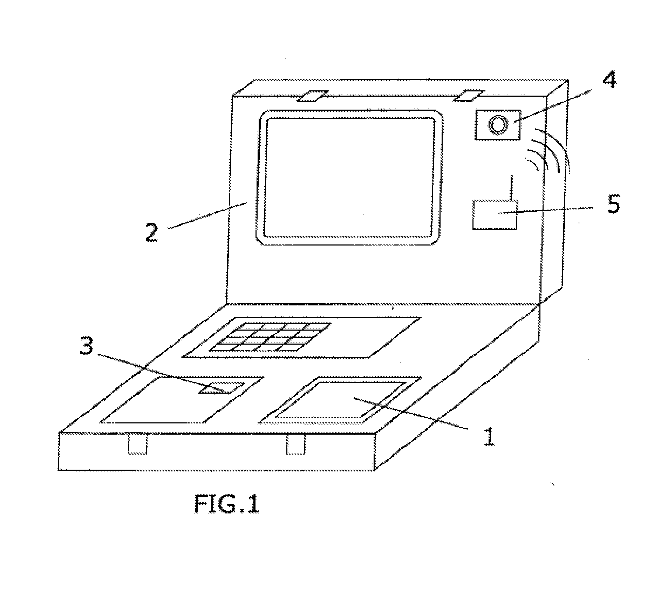

Figure 1 is a schematic representation of the portable device for document verification, where the elements that comprise said device are shown.

### PREFERRED EMBODIMENT OF THE INVENTION

With the above mentioned figures in view, following is a description of a form of preferred embodiment of the invention, as well as an explanation of the drawings.

The portable device that comprises the object of the invention consists of a case, or any similar or equivalent means that allows for portability of the assembly. Inside this equipment is a full-page travel document reader equipped with three types of light, namely normal, ultraviolet and infrared, for reading all kinds of information.

This travel device is connected to a portable computer (2) or PC tablet on which the application used to capture the travel document data, locate its matching original in the database and analyse possible manipulations continuously runs.

In order to make the assembly stand-alone and portable, it is equipped with power supply means housed inside the case: an AC/DC power supply source for the portable, a DC/DC converter for the portable or PC tablet and for the battery charger, as well as a set of batteries with sufficient autonomy to operate without a mains connection.

Power can be supplied either from the AC mains, from the internal battery itself, or else from the battery of an automobile provided, with pilots indicating from where the power supply is being taken.

The equipment may be provided with means to read biometric data (fingerprint, facial, iris, etc.). The figure shows a fingerprint reader (3) that allows for subsequent comparison with the one read from the travel document and/or the central database. Furthermore, for purposes of a better, more reliable identification, it is equipped with a Web camera (4) to take the person's photograph for the same purpose, i.e. comparison with the image of the document and/or the central database. It will also be possible to read the information stored on a chip with/without contact which compares all the above mentioned information and which is printed on the document itself.

As indicated above, in case more information on the read document is required, there is an information transmitter via UMTS, GPRS or the medium that may be technologically available which sends the necessary identification data for subsequent comparison with the data stored in the central database, and in turn the central database can return information.

It is not considered necessary to enlarge on this description for any person skilled in the art to be able to understand the scope of the invention and the advantages that derive therefrom.

The materials, shape, size and arrangement of the elements shall be subject to variations, provided these do not alter the essential nature of the invention.

The terms used in this descriptive report shall always be understood in the broadest, non-limitative sense of the word.

## Claims

1. Portable device for document verification of the type of equipment in charge of verifying and identifying travel documents, **characterised by** the fact that it is portable and stand-alone in its operation and is equipped with a full-page document reader, a portable computer or PC tablet, some devices for reading biometric data (fingerprint, facial, iris, etc.), a document chip reader, and some power supply means housed in a case or portable component, with all the above elements being interconnected to each other, and additionally equipped with some means of control that run on the computer and govern the rest of the integrated equipment.

2. Portable device for document verification, according to claim 1, **characterised by** the fact that the full-page document reader is equipped with three types of light, namely normal, infrared and ultraviolet light.

3. Portable device for document verification, according to claim 1, **characterised by** the fact that the power supply means with which the equipment is provided are:
- AC/DC power supply source for the portable computer or PC tablet.
- AC/DC power supply source for the full-page document reader.
- DC/DC converter in case the power supply comes from either an internal battery of else from the battery of an automobile.

4. Portable device for document verification, according to the above claims, **characterised by** the fact that it has, integrated with the rest of the equipment, a digital fingerprint reader interconnected to the rest of the equipment.

5. Portable device for document verification, according to the above claims, **characterised by** the fact that it has, integrated with the rest of the equipment, a camera that captures photographic images, iris images, etc. and is interconnected to the rest of the equipment.

6. Document verification procedure executed in the device claimed above, **characterised by** the fact that it consists of the following stages:
- Check of the type of document, country of origin, and possible type of document in force in that country.
- Capture of the data on the document.
- Storage of the date in a local and/or central database.
- Search for the matching original document in the database.
- Comparison of the security standards.
- Issue of information on whether or not the document has been manipulated.

7. Document verification procedure where, in addition and if required, it is possible to connect to a central database via GPRS or UMTS, sending data for comparison.
